# EUROPEAN PATENT APPLICATION

(11) **EP 3 166 308 A1**
(43) Date of publication of application: **10.05.2017**
(21) Application number: 16200422.0
(22) Date of filing: 03.02.2011
(51) Int. Cl.: H04N 5/445, H04L 12/28, H04N 21/41, H04N 21/436, H04N 21/442, H04N 21/488

(54) **A METHOD OF NOTIFYING A USER OF THE STATUS OF AN ELECTRICAL APPLIANCE**

(30) Priority: 04.02.2010 US 700408; 04.02.2010 US 700310
(62) Divisional of application: 11707608.3
(71) Applicant: Eldon Technology Limited trading as Echostar Europe, Keighley, Yorkshire BD20 6QW (GB)
(72) Inventor: Crabtree, Michael John, Keighley, Yorkshire BD21 3EZ (GB)
(74) Representative: Beck Greener

(57) **Abstract**

To notify a user of the status of an electronic appliance (120), a device (102) of an entertainment system (100) is sent a message (122) from the appliance (120) via a communication link. The message (122) indicates the status of the appliance (120), for example, in the case of a washing machine, that it has completed a wash cycle. In response to receiving the message (122) the first device (102) transmits data (108) indicating the status over a media content interface (110) to a selected input (112A) of a second device (104) for presentation to the user. The status information may be presented to the user on a display of the entertainment system (100), for example on a television receiver (606A). In addition to presenting status information, the system may gather and present power usage information (714).

## Description

The present invention relates to a method of notifying a user of the status of an electrical appliance, and to apparatus for use in such a method.

A typical home entertainment system might include multiple interconnected electronic components configured to enhance a user's enjoyment of audio/video content, such as movies, sporting events, music, and the like. For example, a home entertainment system including a television, a television receiver or set-top box, and a digital versatile disc (DVD) player may allow a user to view various types of entertainment from multiple sources. In this case, the user may view live broadcast television programming, such as from a cable or satellite television content provider, as well as watch DVD-based content, from the same television. The addition of other system components, such as a standalone digital video recorder (DVR), compact disc (CD) player, or audio receiver and connected speakers, may allow further flexibility in enjoying audio and/or video content.

The applicants have identified that a user enjoying the audio and/or video content provided by a home entertainment system may be so engrossed in, or otherwise distracted by, that content that one or more operating household appliances, such as an oven or stove, dishwasher, clothes washer, or the like, that require user attention may remain unattended. Other types of devices or appliances that may also require user attention, such as a landline or cellular telephone receiving an incoming call, may also require attention that may be difficult to garner from a user who is enjoying a movie or television program.

The applicants have also appreciated that, as people try to be more environmentally friendly, it is becoming more important to track electrical device power usage information within a home. For example, many people desire to know how much power is utilized by each device within their home. This allows a person to identify electrical devices which are using too much electricity, either because the devices are inefficient or the devices are being utilized in an inefficient manner. While meters exist to display the total power usage within a home, such meters may lack the granularity to identify particular sources of electrical inefficiency in a home. Furthermore, many appliances are designed to complete specific tasks, such as washing or drying clothes. A user may be watching television while awaiting completion of the task, but may be unable to hear indicators output by the appliance upon completion of the task, and thus, may not be aware of when the task is completed by the appliance.

The present invention seeks to resolve some of the issues identified above.

According to a first aspect of the present invention there is provided a method of notifying a user of the status of an electronic appliance, the method comprising:
at a first electronic device of an entertainment system, receiving a message from the electronic appliance via a communication link, wherein the message indicates the status of the electronic appliance;
at the first electronic device, in response to receiving the message, transmitting a command to a second electronic device of the entertainment system to select an input of the second electronic device associated with the first electronic device ; and
at the first electronic device, transmitting data indicating the status over a media content interface to the selected input of the second electronic device for presentation to the user.

The data may comprise a video signal indicating the status for presentation to the user, and/or the data may comprise an audio signal indicating the status for presentation to the user.

In an embodiment, the method further comprises
at the first electronic device, receiving video content;
wherein transmitting the data over the media content interface to the selected input of the second electronic device comprises transmitting the data as a picture-in-picture image within the video content over the media content interface to the selected input of the second electronic device.

Preferably, the method further comprises
at the first electronic device, pausing the video content when the video content includes the picture-in-picture image.

The method may further comprise
at the first electronic device, upon receiving a user input, removing the picture-in-picture image from the video content, and resuming presentation of the video content.

Still further, the method may comprise
at the first electronic device, waiting a predetermined time period between transmitting the command and transmitting the data indicating the status.

In an embodiment, the method further comprises
at the first electronic device, transmitting a command to the second electronic device to awaken the second electronic device from a standby state;
wherein the command to awaken the second electronic device is transmitted prior to the command to select the input of the second electronic device associated with the first electronic device.

Preferably, transmitting the command comprises transmitting the command over a consumer electronics control bus associated with the media content interface.

In an embodiment, transmitting the command comprises transmitting a wireless remote control command via a remote control interface of the second electronic device.

Preferably, the first electronic device and the second electronic device are integrated as a single electronic device.

In an embodiment, the first electronic device comprises a television content receiver; and the second electronic device comprises at least one of a television and an audio receiver.

Preferably, the status of the electronic appliance comprises a request for the user to interact with the electronic appliance.

The invention also extends to an electronic device of an entertainment system, comprising:
a first communication interface arranged to receive a message from an electronic appliance, wherein the message indicates a status of the electronic appliance;
control logic for generating data indicating the status of the electronic appliance, and for generating a command to select an input of a second electronic device of the entertainment system;
a second communication interface arranged to transmit the command to the second electronic device; and
a media content output interface arranged to transmit the data to the selected input of the second electronic device for presentation to a user.

In an embodiment, the media content output interface is configured to transmit video content to the selected input of the second electronic device, wherein the video content comprises a picture-in-picture image representing the data indicating the status of the electronic appliance.

Preferably, the first communication interface comprises one of a wireless communication interface and a wired communication interface.

Preferably, the second communication interface comprises at least one of a wireless remote control interface, and a wired control bus associated with the media content output interface.

According to a further aspect of the invention, there is provided a television content receiver, comprising:
a television content input interface for receiving television content;
a television content output interface for transmitting the television content to a television;
a first communication interface arranged to receive a message from an electronic appliance, wherein the message indicates a status of the electronic appliance;
a second communication interface arranged to transmit commands to the television; and
control logic configured to generate a command for transmission to the television via the first communication interface to select an input of the television associated with the television content receiver, to generate a picture-in-picture image indicating the status of the electronic appliance, and to incorporate the picture-in-picture image in the television content for transmission via the television content output interface to the selected input of the television.

The first communication interface may comprise a wireless remote control interface, and/or the first communication interface comprises a control bus associated with the television content output interface.

The invention also extends to a television receiver comprising:
a communication interface operable to receive television programming from a television distribution network and to receive power usage information from an electrical device over a communication network;
an input interface operable to receive user input requesting to view the power usage information; and
control logic operable to:
   output the television programming to a presentation device;
   process the power usage information; and
   output the power usage information to the presentation device responsive to the user input.

In an embodiment, the control logic outputs the power usage information, in place of the television programming, responsive to the user input.

Preferably, wherein the control logic receives first and second power usage information from a plurality of electrical devices, aggregates the first and second power usage information to generate aggregated power usage information and outputs the aggregated power usage information to the presentation device.

The communication interface may receive the power usage information from the electrical device over a wireless communication network.

In an embodiment, the communication interface comprises a HomePlug transceiver and the communication interface and the electrical device communicate over a power supply line.

Preferably, the control logic is operable to generate a request for transmission to the electrical device responsive to the user input, the request soliciting the power usage information from the electrical device.

For example, the communication interface may receive the power usage information according to a periodic schedule.

In an embodiment, the control logic processes the power usage information and outputs a status message, regarding the electrical device, to the presentation device.

If required, the status message is overlaid onto the television programming.

According to a still further aspect of the present invention there is provided apparatus comprising:
a first electrical interface for connection to an external power supply line;
a second electrical interface communicatively coupled to the first electrical interface for receiving electrical power from the power supply line, the second electrical interface being communicatively coupled to the electrical device and operable to transfer electrical power to the electrical device;
control logic operable to measure a usage of electrical power by the electrical device and generate a usage status message based on the usage; and
a communication interface communicatively coupled to the control logic operable to initiate transmission of the usage status message to a television receiver for output to a user.

Preferably, the first electrical interface comprises a first plug for connection to a first socket of the external power supply line and the second electrical interface comprises a second socket for connection to a second plug of the electrical device.

In an embodiment, the communication interface comprises a HomePlug transceiver integrated with the first electrical interface.

Additionally and/or alternatively, the communication interface comprises a wireless transceiver for communicatively coupling to a wireless communication network.

The control logic may be operable to generate the usage status message responsive to determining that the usage is above a specified threshold.

Additionally and/or alternatively, the control logic is operable to generate the usage status message responsive to determining that the usage is above a specified threshold.

The usage status message may include a display message for output by the television receiver.

The invention also extends to a television receiver comprising:
a communication interface operable to receive television programming from a television distribution network and to receive power usage information from an electrical device over a communication network;
an input interface operable to receive user input requesting to view the power usage information; and
control logic operable to:
   output the television programming to a presentation device;
   process the power usage information to identify a status of the electrical device; and
   overlay a status message regarding the electrical device onto the television programming output to the presentation device.

In an embodiment, the control logic processes the power usage information to identify whether a power usage of the electrical device is above a threshold, wherein the power usage above the threshold indicates that the electrical device has been powered on, the control logic further operable to output the status message indicating that the electrical device has been powered on.

Preferably, the control logic processes the power usage information to identify whether a power usage of the electrical device is below a threshold, wherein the power usage below the threshold indicates that the electrical device has been powered off, the control logic further operable to output the status message indicating that the electrical device has been powered off.

In an embodiment, the control logic is further operable to correlate the powering off of the electrical device with completion of a task by the electrical device, the control logic further operable to output the status message indicating completion of the task.

The present invention also extends to a television receiver for receiving information regarding the power usage of an electrical device from the electrical device, and/or from a monitoring device associated with the electrical device, the television receiver then being operable to output the power usage information for presentation by a presentation device. For example, the power usage information may be utilized to identify a current operational status of the electrical device and output an appropriate status message to a user.

Preferably, the television receiver includes a communication interface operable to receive television programming from a television distribution network and to receive power usage information from an electrical device over a communication network. The television receiver may include an input interface operable to receive user input requesting to view the power usage information. The television receiver may also include control logic operable to output the television programming to a presentation device, process the power usage information and output the power usage information to the presentation device responsive to the user input. For example, the power usage information may be overlaid onto the television programming, may be output by the television receiver adjacent to the television receiver or may be output on a separate display.

In an embodiment, the television receiver additionally includes control logic operable to output the television programming to a presentation device, process the power usage information to identify a status of the electrical device and overlay a status message regarding the electrical device onto the television programming output to the presentation device.

According to a further aspect of the invention, there is provided a monitoring device that monitors power usage information regarding an electrical device and provides the power usage information to a television receiver for presentation to a user, the monitoring device including a first electrical interface for connection to an external power supply line and a second electrical interface for communicating with the first electrical interface to receive electrical power supplied by the power supply line, wherein the second electrical interface is for communicating with the electrical device and is operable to supply the electrical power to the electrical device.

The apparatus may also include control logic operable to measure a usage of electrical power by the electrical device and generate a usage status message based on the power usage and a communication interface communicatively coupled to the control logic operable to initiate transmission of the usage status message to a television receiver for output to a user.

Embodiments of the present invention will hereinafter be described, by way of example, with reference to the accompanying drawings, in which:
FIG. 1 is a simplified block diagram of an entertainment system which is in communication with an electronic appliance;
FIG. 2 shows a flow diagram of a method of notifying a user of a status of an electronic appliance;
FIG. 3 is a block diagram of an entertainment system in communication with several appliances;
FIG. 4 is a block diagram of a television set-top box of an entertainment system as in FIG. 3;
FIG. 5 is a graphical representation of a display of a television;
FIG. 6 illustrates a communication system;
FIG. 7 illustrates a television receiver of the system of FIG. 6;
FIG. 8 illustrates the monitoring device of the system of FIG. 6; and
FIG. 9 illustrates a method for outputting power usage information.

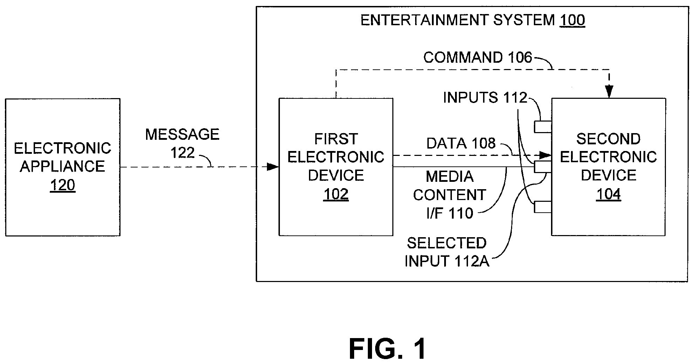

FIG. 1 is a simplified block diagram of an entertainment system 100 in communication or communicatively coupled with an electronic appliance 120. The entertainment system 100 in FIG. 1 employs a first electronic device 102 and a second electronic device 104, although the entertainment system 100 may include other devices, not illustrated. The first device 102 may be a television receiver or set-top box, for example, while the second device 104 may be a television 104 receiving audio and/or video content from the receiver 102. Other combinations of devices other than those shown in FIG. 1 may be provided.

The electronic appliance 120 may be any appliance or device that may require some level of human interaction based on a current status of the appliance 120. Examples of the appliance 120 include household appliances, including but not limited to stoves, ovens, dishwashers, clothes washers, clothes dryers, refrigerators, and freezers. Other examples of devices that may be considered appliances include landline and cellular telephones, weather observation stations, and desktop and laptop computers. In each case, the appliance 120 may complete some phase of operation, such as a laundry or cooking cycle, which requires the intervention or attention of a user. Generally, the appliance 120 employs the entertainment system 100 to inform a user as to that phase or task completion, to any error conditions, or any other status condition about which the user may want to be informed.

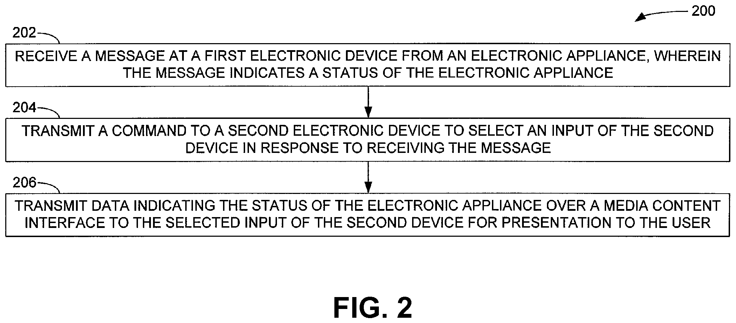

FIG. 2 illustrates a method 200 of notifying a user of a status of the electronic appliance 120 of FIG. 1 via the entertainment system 100. In the method 200, the first electronic device 102 receives a message 122 from the electronic appliance 120 (operation 202). The message 122 indicates a status of the appliance 120. The status may be somewhat detailed, such as an identification of a completed operation or error condition, or just may be a general status indication involving the appliance 120. In response to receiving the message 122, the first electronic device 102 transmits a command 106 to the second electronic device 104 to select an input 112A of the second device 104 associated with the first device 104 (operation 204). The selected input 112A may be one of at least two inputs 112 utilized by the second device 104 to receive media content, such as audio and/or video content, from multiple sources. The first device 120 then transmits data 108 indicating the status of the appliance 120 over a media content interface 110 to the selected input 112A of the second device 104 for presentation to the user (operation 206).

While the operations of FIG. 2 are depicted as being executed in a particular order, other orders of execution, including concurrent or overlapping execution of two or more operations, may be possible. Furthermore, a computer-readable storage medium may have encoded thereon instructions for a processor or other control circuitry of the first electronic device 102 of FIG. 1 to implement the method 200.

As a result of the method 200, a user of the entertainment system 100 may be notified of a status condition of the appliance 120. Consequently, the user need not forego enjoyment of the entertainment system 100 to attend to the appliance 120 upon completion of a particular appliance 120 operation or occurrence of an unexpected situation involving the appliance 120, even if the user is not in close proximity to the appliance 120.

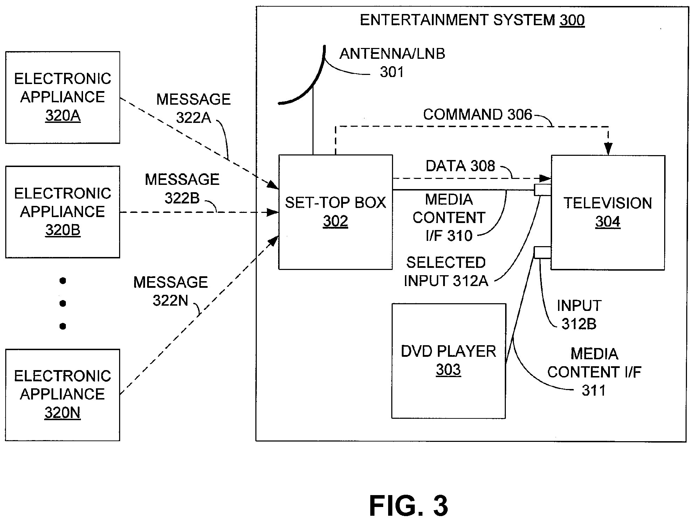

FIG. 3 shows a block diagram of a more specific entertainment system 300 able to receive status information from multiple appliances 320A, 320B, ..., 320N, and inform a user of the entertainment system 300 of that status. As shown in FIG. 3, the entertainment system 300 includes a television receiver or set-top box 302 and a digital versatile disc (DVD) player 303, each of which is coupled to a television 304 or video monitor by way of separate media content interfaces 310, 311. Other devices may also be included in the entertainment system 300, such as a standalone digital video recorder (DVR) unit, an audio receiver or amplifier, and a gaming system, but such devices are not shown in FIG. 3.

As shown in FIG. 3, the set-top box 302 is a satellite television programming receiver adapted to receive audio and/or video content by way of an antenna/low-noise block-converter (LNB) combination 301. However, other types of television set-top boxes, such as cable and terrestrial ("over-the-air") set-top boxes, may be provided. Moreover, other types of entertainment system devices, such as DVR units, DVD players, and so on, may receive appliance status information.

The appliances 320, such as a dishwasher, clothes washer and/or dryer, oven, and the like, may be located at various locations throughout a home that contains the entertainment system 300. Similar to the environment described in FIG. 1, each of the appliances 320 may send one or more messages 322A, 322B, ..., 322N indicating a status of the corresponding appliance 320 to the set-top box 302. The messages 322 are transmitted over a communication link that may be wired or wireless in nature.

In response to receiving the message 322, the set-top box 302 generates and transmits a command 306 to the television 304 to select the input 312A associated with the media content interface 310 corresponding to the set-top box 302. Thus, the set-top box 302 configures the television 304 to accept content from the set-top box 302 (as opposed to the DVD player 303) for presentation to the user. The set-top box 32 then transmits data 308 indicating the status of the appliance 320 to the television 304 over the media content interface 130 communicatively coupling the set-top box 302 with the selected input 312A of the television 304. In turn, the television 304 presents the data, typically in audio and/or video form, to the user to apprise the user of the status of the appliance 320 originating the message 322.

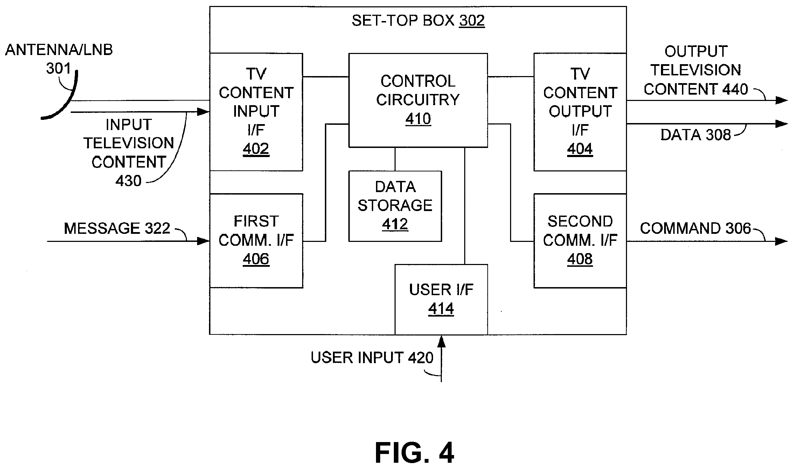

FIG. 4 presents a block diagram of an example of the set-top box 302 illustrated in FIG. 3. In this case, the set-top box 302 includes a television content input interface 402, a television content output interface 404, a first communication interface 406, a second communication interface 408, control circuitry 410, data storage 412, and a user interface 414. Other components or electronic circuits which might be included in the set-top box 302, such as a power supply and a "smart card" interface, are not shown in FIG. 4.

The television content input interface 402 (or, more generally, the media content input interface 402) receives multiple channels of audio and/or video content 430 received and frequency down-converted by the antenna/LNB 301. Such content 430 may be transported between the antenna/LNB 301 and the television content input interface 402 via coaxial cable or other wired or wireless means. The television content input interface 402 may also include one or more tuners for selecting particular programming channels of the incoming content 430 for forwarding to the television 304 or storing in the optional data storage 412, described more fully below. The television content input interface 402 may also perform any decryption, decoding, and similar processing of the received television content 430 required to place the content 430 in a format usable by the data storage 412 and the television content output interface 404. In one example, such a format may be one of the Motion Picture Experts Group (MPEG) formats, such as MPEG-2 or MPEG-4, although other media content format standards may be utilized.

The television content output interface 404 provides the selected and processed television content as output television content 440 to the television 304 of FIG. 3. To that end, the television content output interface 404 may encode the selected television content in accordance with one or more television output formats. For example, the television content output interface 404 may format the content for one or more of a composite or component video connection with associated audio connection, a modulated radio frequency (RF) connection, and a High Definition Multimedia Interface (HDMI) connection.

Continuing with FIG. 4, the first communication interface 406 is configured to receive a message 322 from an appliance 320, with the message 322 indicating a status of the appliance 320. The first communication interface 406 may employ any of a number of communication technologies to receive the message 322, including both wired and wireless varieties. In one example, the first communication interface 406 may be a power line interface, such as the kind standardized by the HomePlug® Powerline Alliance, which facilitates the transfer of control, status, and data information via the electrical power wiring of a home or other building. Thus, the appliance 320 may transfer its message 322 via it own electrical power cord, the electrical power wiring of the home, and the electrical power cord of the receiving set-top box 302. Other types of wired and wireless communication technologies, such as Ethernet, IEEE 1394, Bluetooth®, and Wi-Fi (IEEE 802.11), may be employed for communication of the messages 322.

The information incorporated in each of the messages 322 may depend on several factors, including the particular appliances 320 involved. For example, the message 322 may include an identification of the sending appliance 320, such as an address. Further, the message 322 may include a destination identifier or address for the receiving set-top box 302, especially in systems in which more than one entertainment device may be receiving the messages 322. The transmitting appliance 320 may further include information concerning the status or associated operation in the appliance 320 causing the transmission of the message 322, such as by an alphanumeric code or textual explanation. For example, a dishwasher may transmit a message 322 indicating a wash-and-dry cycle has completed, or that such a cycle will be completed in some stated amount of time. With some appliances 320 now being able to detect error or failure conditions while performing a particular operation, the message 322 may indicate the particular error condition by way of a code or text. Additional or alternate types of information may be incorporated into the message 322.

The second communication interface 408 of the set-top box 302 is arranged to send one or more commands 306, such as an input selection command, to the television 304, under the direction of the control circuitry 410 in response to receiving a message 322. Generally, any communication technology implemented by the television 304 to receive commands may be used in the set-top box 302 to transmit the command 306. In an example in which the media content interface 310 is an HDMI, the set-top box 302 may utilize the Consumer Electronics Control (CEC) bus incorporated within the HDMI to transmit the command 306, presuming the television 304 possesses the capability to accept and process the commands 306 when transmitted using the CEC bus. Other wired connections, whether or not associated with the media content interface 310 coupling the set-top box 302 with the television 304, may be employed to carry the commands 306, including a phone connection, Ethernet, Universal Serial Bus (USB), and so forth.

The set-top box 302 may employ a wireless remote control interface as the second communication interface 408 to issue the command 306 via a remote control input interface of the television 304. More specifically, the second communication interface 408 may operate as a wireless (such as infrared (IR) or radio frequency (RF)) transmitter of remote control commands 306 that may be received by way of the television 304 remote control interface. With respect to IR transmission, the commands 306 may be issued by way of an IR diode coupled with the set-top box 302 via a wire or "tether" to allow the diode to be positioned within close proximity of the remote control receiving circuitry of the television 304. Additionally and/or alternatively, the second communication interface 408 may be capable of transmitting IR remote control commands at a relatively high power to allow the IR command signal to reflect off of nearby walls, ceiling, or furniture to reduce the need for direct line-of-sight between the second communication interface 408 of the set-top box 302 and the remote control interface of the television 304. Other wireless communication technologies, such as Bluetooth® and Wi-Fi, may also be used.

The control circuitry 410 is configured to control and/or access other components of the set-top box 302, including the television content input interface 402, the television content output interface 404, the first communication interface 406, and the second communication interface 408. The control circuitry 410 may include one or more processors, such as a microprocessor, microcontroller, or digital signal processor (DSP), configured to execute instructions directing the processor to perform the required functions. The control circuitry 410 may also include memory or data storage adapted to contain such instructions. Such memory may also include data to aid the control circuitry 410 in performing the tasks more particularly described below. The control circuitry 410 may be strictly hardware-based logic, or may include a combination of hardware, firmware, and/or software elements.

The control circuitry 410 receives the message 322 from the first communication interface 406. In response, the control circuitry 410 generates at least one command 306 via the second communication interface 408 to configure the television 304 properly for receipt and presentation of the data 308 to be transmitted to the television 304 for ultimate presentation to the user. Since the television 304 possesses multiple inputs, at least one command 306 instructs the television 304 to select the input 312A in communication with the television content output interface 404 of the set-top box 302. As a result, the data 308, along with any television content 440 being delivered to the television 304, may be displayed or otherwise presented to the user.

In response to receiving the message 322, the set-top box 302 may transmit other commands 306 to the television 304 in addition to the input selection command. For example, the control circuitry 410 may generate an "on" or "active" command to awaken the television 304 from a current "off" or "standby" operational mode, in which television presentation of any indication of appliance status would not be possible. The set-top box 302 may generate other commands 306 affecting the presentation of the data 308 to the user, such as placing the television 304 in a picture-in-picture (PIP) mode, and adjusting the volume of the television 304. Once generated, the control circuitry 410 may transmit the commands 306 to the television 304 via the second communication interface 408, such as by remote control command, HDMI CEC commands, or the like.

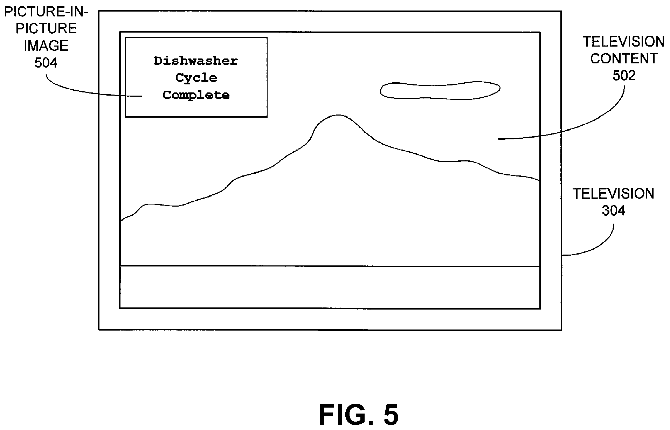

In response to receiving the message 320, the control circuitry 410 also generates data 308 indicating the status of the appliance 320. The data 308 may take any form recognizable by the television 304 so that the appliance 320 status may be presented to the user. For example, the data 308 may take the form of an audio and/or video signal to be transmitted via the television content output interface 404 to the television 304. As shown in FIG. 5, the data 308 may represent a picture-in-picture (PIP) image 504 (in this case, a text display indicating that the dishwasher has completed its operational cycle) incorporated within other television content 502 that is transmitted via the television content output interface 404 for visual presentation to the user by way of the television 304.

In addition to employing picture-in-picture functionality, the control circuitry 410 may pause the delivery of the television content 502 while the picture-in-picture image 504 is being displayed. To accomplish this task, the set-top box 302 may include data storage 412 that may be utilized to buffer or record the selected input television content 430. During the pause mode, the control circuitry 410 may cause the television content output interface 404 to provide a "screensaver" mode after some predetermined time period to prevent the picture-in-picture image 504 and the paused television content 502 from being "burned" into the display of the television 304. In that case, a representation of the data 308, such as the picture-in-picture image 504 shown in FIG. 5, may continue to be presented to the user in the absence of the accompanying television content 502, with the picture-in-picture image 504 being relocated on the display periodically to maintain the screensaver function.

The picture-in-picture image 504, along with the possibly paused television content 502, remains as presented on the television 304 until the user provides some sort of user input 420, such as a command to resume play of the television content 502. This user input 420 may be received via a user interface 414, such as a remote control input interface employing any wireless remote control technology, such as infrared (IR) or radio frequency (RF) signal receiver technology. In response to receiving the user input 420, the control circuitry 410 may remove the picture-in-picture image 504 from the television 304 display and resume playback of the associated television content 502 (if previously paused). Any input received from the user via the user interface 414 may cause at least the removal of the picture-in-picture image 504, along with performing the function associated with the receiver user input 414.

More generally, the data 308 transmitted to the television 304 may take any form compatible with the television 304 for ultimate presentation to the user. For example, the data 308 may be represented as a video signal to be presented by way of the television 304, and/or as an audio signal to be output by way of audio speakers. Further, a video signal representing the data 304 may be a video signal to be displayed as a full screen image, or as a picture-in-picture image, such as the image 504 illustrated in FIG. 5. Further, any video image or representation may employ alphanumeric characters, graphical icons, or some combination thereof. The data 308 may be textual data or some other form of digital information not of a video or audio nature that the television 304 may then process and present to the user as needed.

If the data 308 is transmitted as an audio signal, the set-top box 302 may transfer such a signal to either the television 304, an audio receiver (not shown in FIG. 3), or both. If an audio receiver is the intended destination, the set-top box 302 may transmit commands to the audio receiver that are similar to those commands 306 transferred to the television 304 to awaken the audio receiver, set an appropriate volume level, select an input corresponding to the set-top box 302, and so on, before transferring the audio signal representing the data 308 to the audio receiver for presentation to the user. For example, the set-top box 302 may cause the television 304 or audio receiver to raise or lower its volume level to help draw the attention of the user to the television 304 or audio receiver, thus making the notification of the appliance 320 status more effective.

To ensure that all information between the set-top box 302 and the television 304 is being received and processed correctly, the set-top box 302 may wait a predetermined period of time, such as one second or a fraction thereof, between the transmission of each command 306, as well as between the transmission of the commands 306 and the data 308.

To enable the set-top box 302 to perform the various operations described above, the set-top box 302 may provide means, such as a on-screen menu presented via the television 304, to allow the user to select between various configuration options to enable the functionality presented herein. For example, the user may identify the manufacturer and model of the television 304 to allow the set-top box 302 to communicate with the television 304 properly by way of HDMI, remote control, or the like. Other components of the entertainment system 300 with which the set-top box 302 may communicate, such as the audio receiver referenced above, or a second television, may be identified in a similar fashion. The user may also select which commands 306 are to be sent prior to the transmission of the data 308, as well as identify the format or protocol of the second communication interface 408 employed to transfer the commands 306.

Regarding communications between the appliances 320 and the set-top box 302, the user may be able to inform the set-top box 302 of the identities (such as manufacturer and model number) of the appliances 320 that may be transmitting the messages 322. The user may also associate each appliance with a particular communication network address so that the set-top box 302 may correctly interpret the status information provided by each appliance 320. Accordingly, the set-top box 302 may include in its data storage 412 information relating each possible type of appliance 320 with one or more status indications that may be issued therefrom. The set-top box 302 may download such information by way of the television content input interface 402, and/or a separate communication interface, such as a phone or network connection, and/or from each appliance 320 directly.

Embodiments of the invention enable a user to be apprised of the operational status of a household electronic appliance, such as a dishwasher, oven, freezer, refrigerator, or even a telephone, by way of an entertainment system. For example, a user watching a television program may be notified that a clothes washer has finished its cycle, thus allowing the user to transfer the clothes to a dryer in a timely manner without having to monitor the washer closely. The signal may be transferred from the appliance to a set-top box, which may then transfer data indicating the status to the television being watched. Further, the notification will reach the user even if the user is watching a program being delivered to the television from a DVD player, standalone DVR unit, or the like by way of commands from the set-top box instructing the television to provide information or content to the user via an input coupled with the set-top box. In addition, the set-top box may be turned on or awakened prior to transfer of the status data so that the user may be notified even if the user's attention is not directed to the entertainment system at that time, thus extending the reach of the notification.

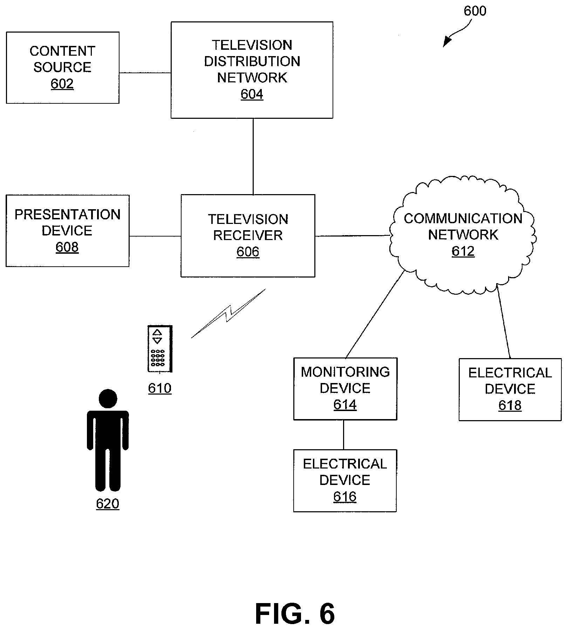

FIG. 6 illustrates a communication system 600. The communication system 600 includes a content source 602, a television distribution network 604, a television receiver 606, a presentation device 608, a remote control 610, a communication network 612, a monitoring device 614, a first electrical device 616 and a second electrical device 618. The communication system 600 may include other components, elements or devices which are not illustrated.

The content source 602 is operable for receiving and/or generating content for communication via the television distribution network 604 to one or more television receivers, e.g., the television receiver 606. The content to be received, processed, outputted and/or communicated may come in any of various forms including, but not limited to, audio, video, data, information, or otherwise. Exemplary content sources 602 include over-the-air (OTA) terrestrial transmission facilities, cable television distribution head-ends, satellite television uplink centers, broadband or internet servers and the like.

The television distribution network 604 is operable to transmit content from the content source 602 to the television receiver 606. The television distribution network 604 may comprise any type of wired (e.g., cable and fiber) and/or wireless (e.g., cellular, satellite, microwave, and other types of radio frequency) communication medium and any desired network topology (or topologies when multiple mediums are utilized). Exemplary television distribution networks 604 include terrestrial, cable, satellite and internet protocol television (IPTV) distribution systems. The television distribution network 604 broadcasts or multicasts content to a plurality of television receivers, e.g., the television receiver 606. The television distribution network 604 may also distribute content to a specific addressable television receiver 606, such as video-on-demand and the like. The content source 602 may be embodied as a transmission facility of the television distribution network 604.

The television receiver 606 is operable to receive content from the television distribution network 604 and output the received content for presentation by the presentation device 608. The television receiver 606 may include a storage medium to store various types of data, such as video content or power usage information, for subsequent presentation to a user. The presentation device 608 may be a display device (e.g., a television) for displaying content to a user 620. The television receiver 606 may receive an audio/video stream in any format (e.g., analog or digital format) and output the audio/video stream for presentation by the presentation device 608. The television receiver 606 is a set-top box (e.g., a satellite television receiver, cable television receiver, terrestrial television receiver, internet protocol television receiver or any other type of receiver/converter box) or other similar device that processes and provides one or more audio and/or video output streams to the presentation device 608 for presentation to the user 620. The television receiver 606 may output menus and other information that allow the user 620 to control the output of audio/video content by the television receiver 606, view electronic programming guides, set recording timers and the like.

The presentation device 608 may comprise any type of device capable of receiving and outputting a video signal in any format. The presentation device 608 includes a television, a computer monitor, a liquid crystal display (LCD) screen, a touch screen and a projector. The presentation device 608 and the television receiver 606 may be communicatively coupled through any type of wired or wireless interface. For example, the presentation device 608 may be communicatively coupled to the television receiver 606 through a coaxial cable, component or composite video cables, an HDMI cable, a VGA or SVGA cable, a Bluetooth or WiFi wireless connection or the like. The television receiver 606 and the presentation device 608 may be integrated as a device combining the functionality of a display device and a television receiver, such as a television with integrated CableCard functionality.

The user 620 may control the television receiver 606 using a remote control 610 or other type of data input device compatible with the television receiver 606. The remote control 610 may comprise any system or apparatus configured to remotely control the output of content by the television receiver 606. For example, the remote control 610 may include buttons for receiving input from the user 620. The remote control 610 includes a touch pad for receiving input from the user 620. The remote control 610 may minimally include a transmitter, an input device (e.g., a keypad) and a processor or control logic for controlling the operation of the remote control 610. The remote control 610 may communicate commands to the television receiver 606 requesting to playback content, temporally move through content (e.g., fast-forward or reverse), adjust the volume, access electronic programming guides, set or edit recording timers, edit preferences of the television receiver 606 and the like. The remote control 610 may additionally be configured to remotely control the presentation device 608. The remote control 610 may communicate with the television receiver 606 and/or the presentation device 608 through any type of wireless communication medium, such as infrared (IR) signals and/or radio-frequency (RF) signals.

The communication network 612 is operable to communicatively couple the television receiver 606 to the monitoring device 614 and/or the electrical device 618. The communication network 610 may utilize any desired combination of wired (e.g., cable and fiber) and/or wireless (e.g., cellular, wireless, satellite, microwave, and radio frequency) communication mediums and any desired network topology (or topologies when multiple mediums are utilized). Exemplary communication networks include television distribution networks, wireless communication networks, public switched telephone networks (PSTN), and local area networks (LAN) or wide area networks (WAN) providing data communication services. The television distribution network 604 and the communication network 610 may be combined into a single physical communication network and/or a single logical communication network, depending on desired design criteria.

The first and second electrical devices 616 and 618 may comprise any type of electrical device within a home or other structure that perform some type of function. The first and second electrical devices 616 and 618 may be connected directly to a power supply line, such as an alternating current (AC) power socket. Additionally and/or alternatively, the first and second electrical devices 616 and 618 may be indirectly connected to a power supply line, e.g., via a power strip, extension cord or other type of electrical interface. The electrical devices 616 and 618 may have appropriate plugs configured to interface with the AC power sockets.

The electrical devices 616 and 618 may include any type of device for which monitoring of the power usage is desired. The devices 616 and 618 may track and report their power usage information to other devices. Additionally and/or alternatively, a monitoring device 614 may be utilized to collect power usage information and report the same to the television receiver 606 for processing. The electrical devices 616 and 618 may comprise typical household appliances such as washing machines, dryers, refrigerators, freezers, stoves, dish washers, microwaves, irons, alarm clocks, trash compactors, water heaters, humidifiers, blenders, food processors, mixers, toasters, coffee makers, espresso makers, bread makers, deep fryers, griddles, pressure cookers, rice cookers, slow cookers, waffle irons or the like. The electrical devices 616 and 618 may also comprise entertainment devices, such as televisions, television receivers, digital video disk (DVD) or other optical disk players, stereos, MP3 players, video game consoles or the like. Furthermore, the electrical devices 616 and 618 may comprise computers or computer peripherals (e.g., scanners, printers, monitors and the like). The electrical devices 616 and 618 may also comprise household lighting, air conditioners, heating systems or the like.

As illustrated in FIG. 6, the electrical device 618 is directly communicatively coupled to the communication network 612. In other words, the electrical device 618 is operable to communicate with other devices of the communication network 612. For example, the electrical device 618 may include an appropriate wired or wireless Ethernet interface that couples to the communication network 612. The electrical device 618 may include a HomePlug® or other type of power line transceiver operable to communicate data to the television receiver 606 over various power supply lines within the structure. For example, the electrical device 618 may transmit power usage information or the like, regarding the electrical power utilized by the electrical device 618, to the television receiver 606. Thus, the electrical device 618 is arranged to communicate its power usage information to other devices, such as the television receiver 606.

As further illustrated in FIG. 6, the monitoring device 614 is communicatively coupled to the communication network 612 and provides an interface for other devices of the communication network 612 to access data related to the electrical device 616. The monitoring device 614 may connect to the communication network 612 via any appropriate wired or wireless connection, such as HomePlug®, WiFi, fiber optic connection or the like. The monitoring device 614 is operable to monitor the electrical power usage of the electrical device 616 and transmit data regarding the power usage to the television receiver 606 for further processing. In at least one embodiment, the monitoring device 614 is configured to interface between an AC power socket and a plug of the electrical device 616 and transfer the electrical power from the socket to the electrical device 616. The monitoring device 614 further tracks such electrical power transferred there through and provides the power usage data to other devices, such as the television receiver 606.

The television receiver 606 is operable to receive power usage information from the monitoring device 614 and/or the electrical device 618 and process such power usage information to provide appropriate output for display to the user 620 by the presentation device 608. The user 620 may request to view power usage information for the home. The television receiver 606 may then identify the power usage information for various devices and output the power usage data for display by the presentation device. For example, the television receiver 606 may output an appropriate display screen that temporarily replaces the output of television content by the television receiver 606. In another scenario, the television receiver 606 may output an appropriate display screen that is presented adjacent television content (e.g., similar to a side-by-side picture-in-picture (PIP)) display or may overlay data onto television programming output by the television receiver 606.

The television receiver 606 may generate the output screen based on data that is stored in the television receiver 606. For example, the television receiver 606 may periodically receive power usage information from the monitoring device 614 and the electrical device 618 and store the power usage information for subsequent processing and output. The television receiver 606 may collect data from the monitoring device 614 and the electrical device 618 as frequently as desired according to design criteria. The television receiver 606 queries the monitoring device 614 and the electrical device 618 for the power usage data periodically (e.g., every night or every week). The monitoring device 614 and/or the electrical device 618 may also be operable to periodically transmit the power usage data to the television receiver 606 without a query (e.g., according to a predetermined schedule).

The television receiver 606 may retrieve power usage data in real-time from the monitoring device 614 and the electrical device 618 to generate the output screen. For example, the user 620 may provide input requesting to view the power usage information for the house. The television receiver 606 may responsively query each of the monitoring device 614 and the electrical device 618 and utilize the received data to generate an appropriate output screen for presentation by the presentation device 608.

The television receiver 606 may output any level of granularity of data over any appropriate time period, depending on desired design criteria. For example, the television receiver 606 may be operable to output a specific subset of data, such as the power usage of the electrical device 616 over the past week or month. The television receiver 606 may provide various input mechanisms (e.g., buttons, drop down menus, list boxes and the like) to allow the user 620 to select specific subsets of data for viewing using the remote control 610.

The television receiver 606 may be operable to aggregate data from multiple sources for output. For example, the user 620 may select to view device power usage data for the entire house and the television receiver 606 may operate to aggregate the power usage of the electrical devices 616 and 618 to generate an aggregated usage total (e.g., the total power usage for the home).

The television receiver 606 may also be operable to utilize data received from the monitoring device 614 and/or the electrical device 618 to output various warnings or status messages for presentation to the user 620. For example, the user 620 may set rules on the television receiver 606 requesting the output of an indicator if the power usage of either of the electrical devices 616 and/or 618 increases above a specified threshold or decreases below a specified threshold. Thus, if the television receiver 606 receives data from the monitoring device 614 and/or the electrical device 616, then the television receiver 606 processes the data and if appropriate, outputs a corresponding indicator message.

An increase or decrease in power usage of an electrical device 616 and/or 618 may indicate an error or malfunction in the operation of the electrical device 616 and/or 618. For example, if the power usage of the electrical device 616 decreases below a threshold value, then the device may be shutting off due to a malfunction. Thus, the television receiver 606 may process the decrease in the power usage and provide appropriate messaging to the user 620 regarding the malfunctioning of the electrical device 616.

An increase in power usage of an electrical device 616 and/or 618 may indicate that the device has been activated (e.g., powered on). For example, the electrical device 618 may comprise household lighting in another room of the home than the television receiver 606. Thus, the user 620 may desire to know when the lights have been turned on in the other room. The electrical device 618 may thus transmit information to the television receiver 606 upon activation of the lighting indicating that the lighting has been turned on. The television receiver 606 responsively outputs an appropriate message indicating the status of the lighting.

A decrease in power usage of an electrical device 616 and/or 618 may indicate that the device has completed a designated task. For example, the electrical device 618 may comprise a washing machine tasked to wash clothing. Thus, the user 620 may desire to know when the washing machine has completed the wash cycle. The electrical device 618 may thus transmit information to the television receiver 606 upon completion of the washing cycle. For example, the electrical device 618 may output its current power usage or a recent change in the power usage of the electrical device 618 corresponding with completion of the washing machine task. The television receiver 606 responsively outputs an appropriate message indicating the status of the washing machine task. For example, the television receiver 606 may overlay a banner message onto television programming, indicating that the washing machine is done washing the clothing.

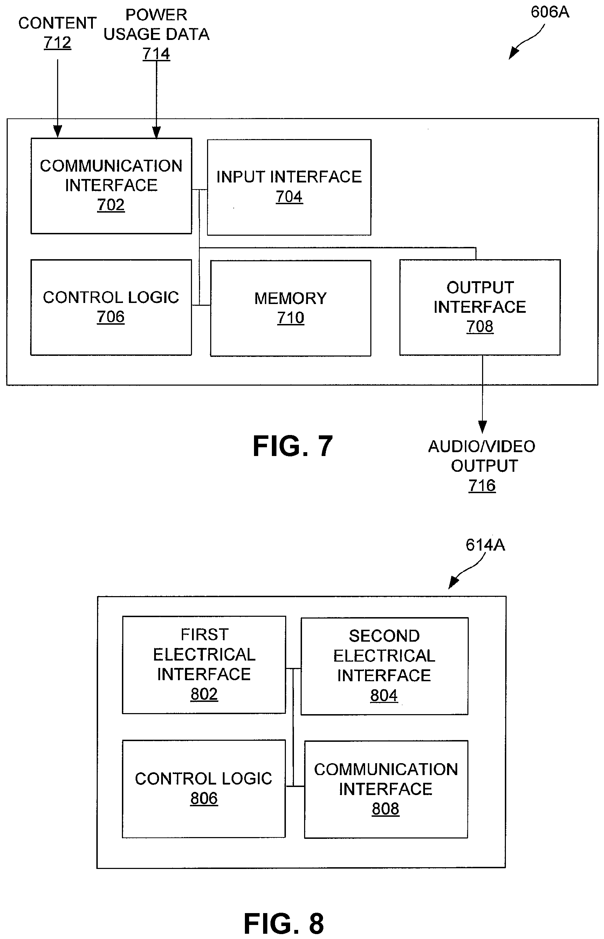

FIG. 7 illustrates a television receiver 606A of the system 600 of FIG. 6. The television receiver 606A includes a communication interface 702, an input interface 704, control logic 706, an output interface 708 and memory 710. The television receiver 606A may include other components, elements or devices not which are illustrated.

The communication interface 702 is operable to receive content 712 from the television distribution network 604. More particularly, the communication interface 702 receives and tunes a television signal including television programming. The communication interface 702 may receive an over-the-air (OTA) broadcast, a direct broadcast satellite signal, a cable television signal or an IPTV signal and tune the content 712 to extract the selected television programming. In at least one embodiment, the communication interface 702 may comprise multiple tuners, utilized by the television receiver 606A to output and/or record multiple television programs simultaneously.

The communication interface 702 is further operable to receive power usage data 714 from the monitoring device 614 and/or the electrical device 618 (see FIG. 6) via the communication network 612. The power usage data 714 may be stored in the memory 710 for subsequent usage or processed by the control logic 706. The communication interface 702 may include a network interface, such as a WiFi transceiver, Ethernet transceiver or HomePlug® transceiver for communication with the communication network 610. The communication interface 702 may receive the content 712 and the power usage data 714 via the same or different communication networks depending on desired design criteria. Furthermore, the communication interface 702 may include any number of discrete communication interfaces to exchange data with external sources, such as the content source 602, the monitoring device 614 and/or the electrical device 618. For example, the communication interface 702 may include a satellite television tuner to receive content from a satellite television distribution network and may include a network interface to receive content from a discrete data communication network, such as a local area network (LAN) or wide area network (WAN).

The input interface 704 is operable to wirelessly receive data from the remote control 610 (see FIG. 6) or other input device, such as a keyboard, mouse, mobile communication device or the like. The input interface 704 may communicate with a remote control utilizing any type of IR and/or RF communication link. The input interface 704 receives a key code from a remote control (not shown in the figures) and responsively provides the key code to the control logic 706 for processing. The data received from the remote control 610 may be utilized by the control logic 706 to control the output of content by the television receiver 606A.

The control logic 706 is operable to control the operation of the television receiver 606A. The control logic 706 may be a single processing device or a plurality of processing devices that cooperatively operate to control the operation of the television receiver 606A. The operation of control logic 706 may be controlled by instructions executable by control logic 706. Some examples of instructions are software, program code and firmware. The control logic 706 may include any sort of microcontroller or microprocessor executing any form of software code. The control logic 706 controls the reception of data/content by the communication interface 702 and the output of video content by the output interface 708. The control logic 706 is operable to generate menus, such as electronic programming guide menus, or power usage data menus for presentation by the presentation device 608. The control logic 706 may include various components or modules for processing and outputting audio/video content. Exemplary components or modules for processing audio/video content include a demodulator, a decoder, a decompressor, a conditional access module and a transcoder module.

The control logic 706 is communicatively coupled to the memory 710, which is operable to store data during operation of the control logic 706. Such data may include software and firmware executed by the control logic 706 as well as system and/or program data generated during the operation of the control logic 704. Memory 710 may comprise any sort of digital memory (including any sort of read only memory (ROM), RAM, flash memory and/or the like) or any combination of the aforementioned. The memory 710 is arranged to store power usage data, received by the communication interface 702 from the monitoring device 614 and/or electrical device 618, for subsequent usage in generating power usage information display screens for presentation by the presentation device 608.

The television receiver 606A also includes an output interface 708 operable to interface with the presentation device 608. More particularly, the output interface 708 is operable to output audio/video content 716 for presentation by the presentation device 608 (see FIG. 6). The output interface 708 may be operable to output any type of presentation data to the presentation device 608, including audio data, video data, audio/video (A/V) data, textual data, imagery or the like. Additionally and/or alternatively, the output interface 708 may comprise a network interface operable to transmit data to other components, devices or elements, such as other computers, servers and the like. The output interface 708 may receive data from the control logic 706 and/or other components of the television receiver 606A for output to the presentation device 608 (see FIG. 6).

The output interface 708 may include multiple output connections operable to transmit data to the presentation device 608 in multiple formats through multiple communication mediums. For example, the output interface 708 may include a modulator operable to modulate data onto an NTSC channel for transmission to the presentation device 608 through a coaxial cable. The output interface 708 may additionally and/or alternatively include composite or component outputs which communicatively couple to similar outputs of the presentation device 608 through appropriate cabling. For example, the output interface 708 may comprise a High Definition Multimedia Interface (HDMI) that outputs high definition content to the presentation device 608.

The output interface 708 may bi-directionally communicate with the presentation device 608. For example, an HDMI port is capable of bi-directionally communicating with the presentation device 608. The output interface 708 may receive various types of data from the presentation device 608 over the bi-directional communication link. For example, the presentation device 608 may transmit information identifying itself and/or its capabilities to the output interface 708. Other bi-directional communication links, such as Ethernet, WiFi, IEEE 1394, USB and the like may also be used. The presentation device 608 may provide power usage data to the television receiver 606A via the bi-directional output interface 708.

The communication interface 702 receives power usage data 714 from the monitoring device 614 and/or the electrical device 618. Such power usage data 714 may be received by the communication interface 702 responsive to communications initiated by the monitoring device 614 and/or the electrical device 618 or may alternatively be received responsive to communications initiated by the control logic 706. The communication interface 702 then provides the power usage data 714 to the control logic 706 for further processing. The control logic 706 may then process the power usage data 714 to generate appropriate output data or coordinate storage of the power usage data 714 onto the memory 710 for subsequent usage.

The control logic 706 may process the power usage data 710 to provide status messages regarding an electrical device 616 and/or 618. The control logic 706 generates the status messages based on the power usage data 714. For example, the control logic 706 may generate a status message, for overlay onto television programming, indicating that a washing machine has completed the task of washing a load of laundry. The control logic 706 may generate a status message indicating that a garage door opener has been activated and is currently opening the garage door. The control logic 706 is operable to correlate the powering off of an electrical device 616 and/or 618 with completion of a task by the device and output an appropriate status message regarding the same.

The input interface 704 may receive user input from the remote control 610 (see FIG. 6) requesting to view power usage information for the house. The control logic 706 processes the input and responsively generates an appropriate display menu presenting the power usage for one or more of the electrical devices 616 and 618 in the house. The control logic 706 may generate the output display screen based on data stored in the memory 710 and/or may query the monitoring device 614 and the electrical device 618 to obtain the power usage data 714 utilized to generate the power usage display screen.

FIG. 8 illustrates a monitoring device which may be used in a communication system 600 of FIG. 6. The monitoring device 614A includes a first electrical interface 802, a second electrical interface 804, control logic 806 and a communication interface 808.

The first electrical interface 802 is operable to connect to an external power supply line. The first electrical interface 802 is operable to receive electrical power from the external power supply line. The first electrical interface 802 comprises a plug that connects to a socket of the external power supply.

The second electrical interface 804 is communicatively coupled to the first electrical interface 802 to receive electrical power supplied by the power supply line. The second electrical interface 804 is further communicatively coupled to the electrical device and operable to supply the electrical power to the electrical device 616 (see FIG. 6). In other words, the first electrical interface 802 and the second electrical interface 804 operate to transfer electrical power from the external supply line to the electrical device 616. In at least one embodiment, the second electrical interface 804 comprises a second socket that connects to a plug of the electrical device 616.

The control logic 806 is operable to control the operation of the monitoring device 614A. The control logic 806 may be a single processing device or a plurality of processing devices that cooperatively operate to control the operation of the monitoring device 614A. The control logic 806 may include any sort of microcontroller or microprocessor executing any form of software code. The functionality of the control logic 806 may also be implemented in hardware or any combination of software/hardware, depending on desired design criteria.

The control logic 806 is operable to monitor the power usage of the electrical device 616. More particularly, the control logic 806 is operable to monitor and track the amount of electrical power that is transmitted from the first electrical interface 802 to the second electrical interface 804. The control logic 806 may include associated memory (not shown in FIG. 8), such as RAM, battery backed up memory or flash to store the power usage information. The control logic 806 may then periodically transmit the power usage information to the television receiver 606 (see FIG. 6) or provide such information to the television receiver 606 responsive to queries from the television receiver 606.

The control logic 806 may also generate a usage status message, based on the power usage information, and initiate transmission of the usage status message to the television receiver 606. For example, the control logic 806 may generate the usage status message responsive to determining that the power usage of the electrical device 616 is above or below a specified threshold. The usage status message may include a display message that may be output by the television receiver 606.

The communication interface 808 communicatively couples to the communication network 612 (see FIG. 6) and exchanges data with the television receiver 606. The communication interface 808 may include any type of network interface, such as a WiFi transceiver, Ethernet interface or HomePlug® transceiver for communication with the communication network 610. The communication interface 808 may comprise a HomePlug® transceiver and may be integrated with the first electrical interface 802. In other words, the communication interface 808 may transmit data to the same external power supply line that the first electrical interface 802 receives power therefrom.

The communication interface 808 may receive queries from the television receiver 606 and/or transmit messages to the television receiver 606 responsive to a command from the control logic. For example, the control logic 806 may aggregate power usage information over a period of time and initiate transmission of the power usage information to the television receiver 606 via the communication interface 808. The power usage information may be transmitted to the television receiver 606 in a message that includes identifying information regarding the monitoring device 614 and/or the attached electrical device 616.

The control logic 806 may also generate messages, rather than power usage information, for transmission to the television receiver 606. For example, the control logic 806 may implement rules to generate status messages regarding the power usage of the electrical device. The control logic 806 may monitor the power usage of the electrical device 616 to determine when the electrical device 616 has completed a specific task, such as washing clothes). The control logic 806 may then generate an appropriate message, which is transmitted by the communication interface 808 to the television receiver 606 for output by the presentation device 608. Any type of rule may be applied by the control logic 806 to the processing of the power usage information in order to generate appropriate status messages for output by the television receiver 606 (e.g., a device has been turned on/off, a device is malfunctioning, a device has completed its task and the like).

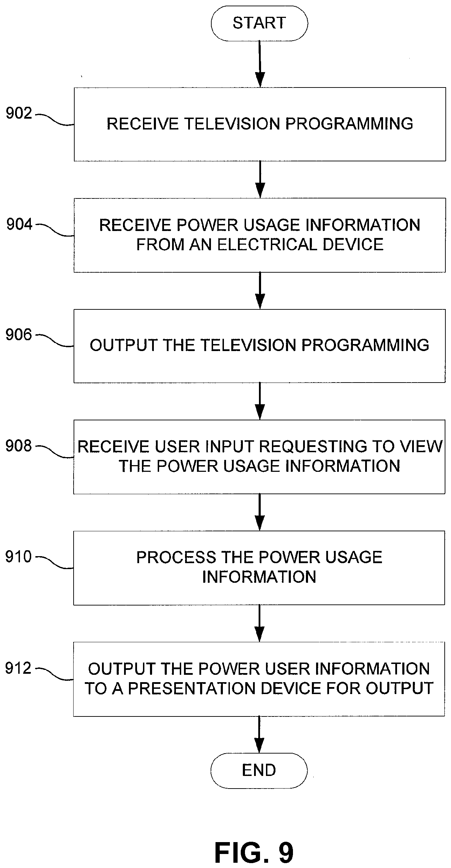

FIG. 9 illustrates a method for outputting power usage information which may be performed by a television receiver to aggregate power usage information for output to a user. The process of FIG. 9 may include other operations which are not illustrated.

The method includes receiving television programming, at a television receiver, from a television distribution network (operation 902). The method further includes receiving power usage information, from an electrical device, over a communication network (operation 904). The power usage information may be received directly from the electrical device for which the data corresponds with the device or may be received from a monitoring device tasked with collecting such power usage data regarding the device.

The method further includes outputting the television programming to a presentation device (operation 906) and receiving user input requesting to view the power usage information (operation 908). Responsive to the user input, the method includes processing the power usage information (operation 910) and outputting the power usage information to the presentation device responsive to the user input (operation 912). For example, the television receiver may replace the power usage information temporarily with a display screen that includes and/or describes the power usage information. Thus, a user is able to view the power usage information for multiple devices in a single, convenient location.

It will be appreciated that variations of, and modifications to the embodiments as described and illustrated may be made within the scope of the accompanying claims.

## Claims

1. A television receiver comprising:
a communication interface operable to receive television programming from a television distribution network and to receive power usage information from an electrical device over a communication network;
an input interface operable to receive user input requesting to view the power usage information; and
control logic operable to:
output the television programming to a presentation device;
process the power usage information; and
either:
output the power usage information to the presentation device responsive to the user input,
or
output a status message regarding the electrical device onto the television programming output to the presentation device, wherein the status is derived by processing the power usage information.

2. A television receiver as claimed in Claim 1, wherein the control logic outputs the power usage information, in place of the television programming, responsive to the user input and/or wherein the status message is overlaid onto the television programming.

3. A television receiver as claimed in Claim 1 or Claim 2, wherein the control logic receives first and second power usage information from a plurality of electrical devices, aggregates the first and second power usage information to generate aggregated power usage information and outputs the aggregated power usage information to the presentation device.

4. A television receiver as claimed in any of Claims 1 to 3, wherein the communication interface receives the power usage information from the electrical device over a wireless communication network.

5. A television receiver as claimed in any of Claims 1 to 4, wherein the communication interface comprises a HomePlug transceiver and the communication interface and the electrical device communicate over a power supply line.

6. A television receiver as claimed in any of Claims 1 to 5, wherein the control logic is operable to generate a request for transmission to the electrical device responsive to the user input, the request soliciting the power usage information from the electrical device.

7. A television receiver as claimed in any of Claims 1 to 6, wherein the communication interface receives the power usage information according to a periodic schedule.

8. A television receiver as claimed in any of Claims 1 to 7, wherein a status message is output and wherein the control logic processes the power usage information to identify whether a power usage of the electrical device is above a threshold, wherein the power usage above the threshold indicates that the electrical device has been powered on, the control logic further operable to output the status message indicating that the electrical device has been powered on.

9. A television receiver as claimed in any of Claims 1 to 8, wherein a status message is output and wherein the control logic processes the power usage information to identify whether a power usage of the electrical device is below a threshold, wherein the power usage below the threshold indicates that the electrical device has been powered off, the control logic further operable to output the status message indicating that the electrical device has been powered off.

10. A television receiver as claimed in Claim 9, wherein a status message is output and wherein the control logic is further operable to correlate the powering off of the electrical device with completion of a task by the electrical device, the control logic further operable to output the status message indicating completion of the task.

11. Apparatus comprising:
a first electrical interface for connection to an external power supply line;
a second electrical interface communicatively coupled to the first electrical interface for receiving electrical power from the power supply line, the second electrical interface being communicatively coupled to the electrical device and operable to transfer electrical power to the electrical device;
control logic operable to measure a usage of electrical power by the electrical device and generate a usage status message based on the usage; and
a communication interface communicatively coupled to the control logic operable to initiate transmission of the usage status message to a television receiver for output to a user.

12. Apparatus as claimed in Claim 11, wherein the first electrical interface comprises a first plug for connection to a first socket of the external power supply line and the second electrical interface comprises a second socket for connection to a second plug of the electrical device.

13. Apparatus as claimed in any of Claims 11 or Claim 12, wherein the control logic is operable to generate the usage status message responsive to determining that the usage is above a specified threshold.

14. Apparatus as claimed in any of Claims 11 to 13, wherein the control logic is operable to generate the usage status message responsive to determining that the usage is above a specified threshold.

15. Apparatus as claimed in any of Claims 11 to 14, wherein the usage status message includes a display message for output by the television receiver.
